# EUROPÄISCHE PATENTSCHRIFT

(11) **EP 0 849 116 B1**
(45) Veröffentlichungstag und Bekanntmachung des Hinweises auf die Patenterteilung: **11.08.1999**
(21) Anmeldenummer: 96120483.1
(22) Anmeldetag: 19.12.1996
(51) Int. Cl.: B60Q 1/068

(54) **Einstellvorrichtung für einen Reflektor eines Fahrzeugscheinwerfers**
Adjusting device for the reflector of a vehicle headlight
Dispositif de réglage pour le reflecteur d'un phare de véhicule

(43) Veröffentlichungstag der Anmeldung: 24.06.1998
(73) Patentinhaber: Hella KG Hueck & Co., 59552 Lippstadt (DE)
(72) Erfinder: Herbers, Thomas, 59555 Lippstadt (DE)

(56) Entgegenhaltungen:
- DE-A- 3 102 375
- DE-C- 4 216 274
- DE-U- 8 533 781

## Beschreibung

Die Erfindung betrifft eine Einsfellvorrichtung für einen Reflektor eines Fahrzeugscheinwerfers mit einem ein treibendes und getriebenes Rad aufweisenden Schraubgetriebe, dessen Radachsen quer und in einem Abstand zueinander verlaufen und dessen treibendes Rad mit einer auf der Außenseite des Scheinwerfers angeordneten Drehvorrichtung versehen ist und dessen getriebenes Rad auf einen Verstellbolzen aufgeschraubt ist, welcher in seiner Längsausdehnung axial verstellbar und drehfest mit dem Scheinwerfer verbunden ist und welcher mit einem Endabschnitt mit dem in ein Scheinwerfergehäuse eingesetzten Reflektor gekoppelt ist.

Eine solche Einstellvorrichtung für einen Reflektor eines Fahrzeugscheinwerfers (gemäß dem Oberbegriff des Anspruchs 1) ist aus der EP 0 689 959 A1 bekannt. Durch die Einstellvorrichtung ist der Reflektor in einem topfförmigen Scheinwerfergehäuse um eine Achse verschwenkbar. Ein Verstellbolzen der Einstellvorrichtung geht durch eine Durchgangsöffnung des Scheinwerfergehäuses hindurch und ist in einer die Durchgangsöffnung umgebenden Hülse des Scheinwerfergehäuses geführt. Der Verstellbolzen weist an dem in das Innere des Scheinwerfergehäuses weisenden Endabschnitt einen Kugelkopf auf, welcher in eine Kugelschale des Reflektors einsetzbar ist. Auf der Außenseite des Scheinwerfergehäuses ist ein Schraubgetriebe angeordnet, welches mit dem Verstellbolzen zusammenwirkt. Das Schraubgetriebe besteht aus einer treibenden Schnecke und einem getriebenen Schneckenrad. Das Schneckenrad ist auf ein Außengewinde des Verstellbolzens aufgeschraubt und liegt mit einer Stirnfläche an der Außenseite des Scheinwerfergehäuses an. Das Schraubgetriebe ist durch einen an der Außenseite des Scheinwerfergehäuses aufgesetzten und durch Befestigungselemente an dem Scheinwerfergehäuse festgesetzten Deckel abgedeckt und gehaltert. Der Verstellbolzen weist an seinem aus dem Schneckenrad herausragenden Endabschnitt ein im Querschnitt als Vieleck ausgeführtes Führungselement auf, welches in eine entsprechend gestaltete Führung des Deckels eingreift. Dadurch ist der Verstellbolzen in seiner Längsausdehnung in der Führung verschiebbar und drehfest gegenüber dem Deckel arretiert. Die Schnecke ist durch eine Öffnung des Deckels hindurchgeführt und greift mit einem Lagerzapfen in eine Lageröffnung im Inneren des Deckels selbstrastend ein. Ein durch die Öffnung des Deckels hindurchführender Abschnitt der Schnecke weist eine umlaufende Nut für einen Dichtungsring auf, welcher an der Innenseite der Öffnung des Deckels anliegt. Ein aus der Öffnung nach außen herausragender Endabschnitt der Schnecke weist eine Drehvorrichtung auf. Bei der Montage des Schneckengetriebes ist zuerst die Schnecke in den Deckel einzusetzen. In einem zweiten Arbeitsschritt ist das Schneckenrad zusammen mit dem in das Schneckenrad eingedrehten Verstellbolzen in den Deckel einzusetzen. In einem dritten Arbeitsschritt ist der Deckel mittels der Befestigungselemente außen am Scheinwerfergehäuse festzusetzen. Um eine klapperfreie Halterung des Reflektors zu erreichen, muß sowohl der Verstellbolzen spielfrei in die Durchgangsöffnung des Scheinwerfergehäuses und die Führung des Deckels eingreifen als auch das Schraubengetriebe spielfrei zwischen dem Deckel und dem Scheinwerfergehäuse angeordnet sein. Dadurch sind sehr enge Toleranzen zwischen dem Scheinwerfergehäuse, dem Deckel und dem Führungselement des Verstellbolzens notwendig. Bei einem stramm zwischen Deckel und Scheinwerfergehäuse eingesetzten Schneckenrad kann die Einstellvorrichtung nur schwergängig festgestellt werden. Außerdem ist der Reflektor nicht bis zum Schneckenrad hin verstellbar, da zwischen dem Schneckenrad und dem Reflektor das Scheinwerfergehäuse und die für den Verstellbolzen dienenden Hülse verläuft, welche die Durchgangsöffnung des Scheinwerfergehäuses umgibt.

Die aus der EP 0 649 774 A1 bekannte Einstellvorrichtung für einen Reflektor eines Fahrzeugscheinwerfers weist kein Schneckenradgetriebe, sondern ein Kegelradgetriebe auf. Ein Kegelradgetriebe kann nachteilig sein, da es nicht wie ein Schneckenradgetriebe selbsthemmend ist und sich somit die Einstellvorrichtung selbsttätig verstellen kann. Außerdem ist mit dem Kegelradgetriebe nicht eine so große Untersetzung wie mit dem Schneckenradgetriebe möglich. Ist eine große Untersetzung gewünscht, so baut ein Kegelradgetriebe sehr groß. Für das Kegelradgetriebe entfällt ein separater Deckel, da es im Inneren des Scheinwerfergehäuses angeordnet ist. Zur Halterung der Kegelräder und des Verstellbolzens sind keine zusätzlichen Teile notwendig. Das treibende Kegelrad ist von der Außenseite des Scheinwerfergehäuses her durch eine Öffnung des Scheinwerfergehäuses hindurchgeführt und ist in der Öffnung selbstrastend festgesetzt. Das treibende Kegelrad haltert das getriebene Kegelrad an der Innenseite des Scheinwerfergehäuses. Damit das getriebene Kegelrad auf der dem treibenden Rad gegenüberliegenden Seite nicht von der Innenseite des Scheinwerfergehäuses abhebt, muß dieses in eine möglichst tiefe Lageröffnung spielfrei eingesetzt sein. Außerdem kann der Reflektor wegen des treibenden Kegelrades nicht bis zum getriebenen Kegelrad hin verstellt werden. Ferner baut ein Kegelradgetriebe in Richtung der Achse des treibenden Rades immer größer als ein Schraubgetriebe.

Aufgabe der Erfindung ist es, die im Oberbegriff des Anspruchs 1 beschriebene Einstellvorrichtung für einen Reflektor eines Fahrzeugscheinwerfers derart zu gestalten, daß zwischen dem getriebenen Rad und dem Reflektor kein das getriebene Rad halterndes Teil notwendig ist, welches den Verstellweg des Reflektors verkleinert bzw. die Bautiefe des Scheinwerfers vergrößert und des weiteren zur Halterung des Schraubgetriebes und zur dichten Unterbringung des Schraubgetriebes keine zusätzlichen Teile notwendig sein müssen. Diese Aufgabe wird nach der Erfindung dadurch gelöst, daß das Schraubgetriebe innerhalb des Scheinwerfergehäuses angeordnet ist, wobei das treibende Rad an eine umlaufende Schulter des getriebenen Rades angrenzt und das getriebene Rad an der Innenseite des Scheinwerfergehäuses haltert und das treibende Rad in eine Öffnung einer Seitenwand des Scheinwerfergehäuses eingreift. Dadurch ist kein gesondertes Getriebegehäuse notwendig. Bei einer Montage ist zuerst das getriebene Rad und danach das treibende Rad zu montieren, da das treibende Rad nach seiner Anlage an der Schulter des getriebenen Rades das getriebene Rad an der Innenseite des Scheinwerfers haltert. Dient als Schraubgetriebe ein Schneckengetriebe, so ist eine sehr große Untersetzung gegeben, und das Schneckengetriebe ist leichtgängig drehbar, da zwischen den Zähnen des Schneckenrades und der Schnecke nur eine punktförmige Anlage besteht.

Das treibende Rad ist sehr einfach und schnell montierbar, wenn es von der Außenseite des Scheinwerfergehäuses her durch die Öffnung der Seitenwand des Scheinwerfergehäuses hindurchgeführt ist, selbsttätig an dem Scheinwerfergehäuse festgesetzt ist und in eine zum getriebenen Rad hin geöffnete Lagerschale des Scheinwerfergehäuses eingreift. Beim Einsetzen des treibenden Rades durch die Öffnung der Seitenwand des Scheinwerfergehäuses gleitet das treibende Rad mit seiner Verzahnung an der Lagerschale des Scheinwerfergehäuses entlang, bis das treibende Rad mit seiner Verzahnung in die Verzahnung des getriebenen Rades eingreift und seine Endstellung erreicht hat. Das treibende Rad ist durch einfache Art und Weise selbsttätig an dem Scheinwerfergehäuse festsetzbar, wenn an den Rand der Öffnung des Scheinwerfergehäuses eine Rastzunge angeformt ist, welche in das Innere des Scheinwerfers gerichtet ist und selbsttätig in eine umlaufende Nut des treibenden Rades eingreift.

Das Scheinwerfergehäuse ist an der das treibende Rad aufnehmenden Öffnung, ohne separate Dichtungselemente verwenden zu müssen, dicht, wenn das treibende Rad mit dem die Drehvorrichtung aufweisenden und aus der Öffnung des Scheinwerfergehäuses herausragenden Endabschnitt einen umlaufenden Flansch aufweist, welcher an der Außenseite des Scheinwerfergehäuses dicht anliegt. Hierbei ist es vorteilhaft, wenn die Öffnung des Scheinwerfergehäuses außen von einem Kragen umgeben ist, an dessen Stirnfläche der Flansch des treibenden Rades dicht anliegt und der Flansch mit seinem freien Randabschnitt zum Scheinwerfergehäuse hin gerichtet ist.

Eine spielfreie Anlage des treibenden Rades an dem getriebenen Rad ist auch bei größeren Toleranzen möglich, wenn das treibende Rad mit dem die Verzahnung aufweisenden Endabschnitt hohl ausgeführt ist und einen aus dem Hohlraum herausragenden Lagerzapfen aufweist, welcher in eine Lageröffnung des Scheinwerfergehäuses eingreift. Wegen der Länge des Lagerzapfens ist dieser an seinem freien Ende radial elastisch nachgiebig und gleicht somit Toleranzen zwischen den beiden Rädern des Schraubgetriebes aus.

Das getriebene Rad ist sicher an der Innenseite des Scheinwerfergehäuses gelagert, wenn es in einer zum treibenden Rad hin geöffneten Schale und mit dem vom Reflektor abgewandten Endabschnitt in eine Mulde eines Lagers des Scheinwerfergehäuses eingreift. Die zum treibenden Rad hin geöffnete Schale des Lagers kann einen größeren Durchmesser als das getriebene Rad aufweisen, und somit kann diese Schale, ohne zusätzliche verstellbare Werkzeugteile verwenden zu müssen, von dem das Innere des Gehäuses formenden Werkzeugteil entformt werden.

Das getriebene Rad kann an seiner Schulter einen kleinen Außendurchmesser aufweisen, und das treibende und getriebene Rad sind leichtgängig verdrehbar, wenn die an das treibende Rad angrenzende Seitenfläche der Schulter des getriebenen Rades als Hohlkehle ausgeführt ist, welche dem Kopfkreisdurchmesser des treibenden Rades angepaßt ist. Hierbei liegt das treibende Rad mit der Kopffläche seiner Verzahnung an der Hohlkehle an, welche zwischen den Flanken der Verzahnung des getriebenen Rades ausläuft.

Der Verstellbolzen ist leichtgängig verstellbar, und es entstehen beim Verstellen des Reflektors um eine Achse keine unerwünscht großen Verspannungskräfte zwischen dem Verstellbolzen und dem Reflektor, wenn der Verstellbolzen aus einem elastisch nachgiebigen Kunststoff hergestellt ist, ein grobes Außengewinde aufweist und auf sich abgewandten Seiten mit einer Abflachung versehen ist, wobei Abschnitte des Verstellbolzens, welche zwischen den Flanken des groben Außengewindes verlaufen, als Sollbiegestellen für den Verstellbolzen dienen. Hierbei sollten die Abflachungen jeweils in einer Fläche verlaufen, zu welcher die Achse, um welche der Reflektor schwenkbar ist, parallel verläuft. Die Sollbiegestellen sind besonders gut ausgeprägt, wenn in mindestens einer Abflachung des Verstellbolzens eine Einkerbung eingebracht ist, welche die Sollbiegestelle bildet. Hierbei ist es zweckmäßig, wenn in beide Abflachungen Einkerbungen eingebracht sind, wobei in jedem Abschnitt des Verstellbolzens, welcher zwischen zwei Flanken des Außengewindes verläuft, jeweils nur eine Einkerbung eingebracht ist, und zwischen zwei Einkerbungen in einer Abflachung ein Abschnitt frei von einer Einkerbung bleibt.

Bei einer besonders vorteilhaften Weiterbildung der Erfindung weist der Verstellbolzen ein angeformtes Führungselement auf, welches zwischen dem getriebenen Rad und dem freien Endabschnitt des Verstellbolzens angeordnet ist und durch die Anlage an zwei sich zugewandten Gleitflächen des Scheinwerfergehäuses gegenüber dem Scheinwerfergehäuse drehfest fixiert ist. Hierbei ist es vorteilhaft, wenn zwischen beiden Gleitflächen ein Gelenk angeordnet ist, welches von dem freien Endabschnitt des Verstellbolzens und einer Gelenkschale des Reflektors gebildet ist. Da das Führungselement des Verstellbolzens immer sehr nahe dem Reflektor angeordnet ist, ist ein vibrationsfreies Halten des Reflektors sicher. Die Gleitflächen sollten in Anbaulage des Scheinwerfers in einer horizontalen Fläche verlaufen, da der Reflektor im Fahrbetrieb im wesentlichen vertikalen Schwingungen ausgesetzt ist.

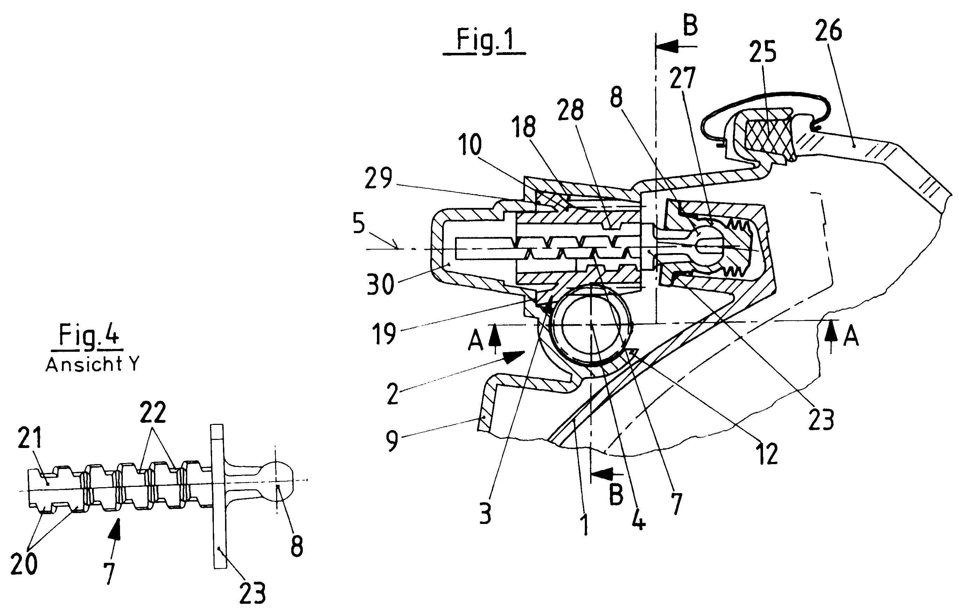

Ein Ausführungsbeispiel nach der Erfindung ist in der Zeichnung dargestellt, und zwar zeigen
- Figur 1: in einer Teilansicht einen vertikalen Schnitt durch einen Scheinwerfer für Fahrzeuge mit einer ein Schraubgetriebe aufweisenden Einstellvorrichtung, wobei der Reflektor in eine Endstellung geschwenkt ist;

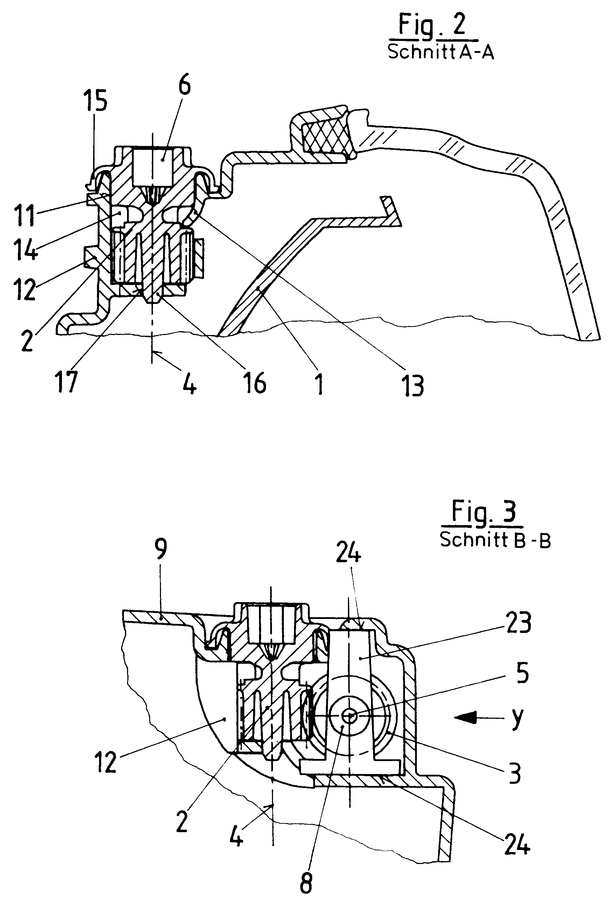

- Figur 2: einen Schnitt nach der Linie A-A in Figur 1 durch ein treibendes Rad des Schraubgetriebes;
- Figur 3: einen Schnitt nach der Linie B-B in Figur 1 und
- Figur 4: eine Ansicht aus Richtung X in Figur 4 auf einen Verstellbolzen, welcher in ein getriebenes Rad des Schraubgetriebes eingedreht ist.

Der Scheinwerfer für Fahrzeuge weist ein aus Kunststoff bestehendes topfförmiges Scheinwerfergehäuse (9) auf, auf dessen vorderen umlaufenden Rand unter Zwischenschaltung einer Dichtung (25) eine schalenförmige, lichtdurchlässige Abschlußscheibe (26) aufgesetzt ist. Im Inneren des Scheinwerfers ist mindestens ein schalenförmiger Reflektor (1) angeordnet, welcher aus Kunststoff hergestellt ist und um eine horizontale und vertikale Achse (nicht dargestellt) schwenkbar ist. Der Reflektor (1) ist um die vertikale Achse durch eine Einstellvorrichtung schwenkbar, welche ein aus treibendem und getriebenem Rad (2 und 3) bestehendes Schraubgetriebe und einen Verstellbolzen (7) aufweist. Das Schraubgetriebe weist Radachsen (4 und 5) auf, welche sich in einem Abstand zueinander kreuzen. Der Verstellbolzen ist aus einem elastisch nachgiebigen Kunststoff hergestellt und weist an einem freien Endabschnitt (8) einen Kugelkopf auf, welcher in eine mit dem Reflektor (1) verbundene Kugelpfanne (27) eingreift. Der Kugelkopf des Verstellbolzens (7) und die Kugelpfanne (27) des Reflektors (1) sind ein Kugelgelenk, welches beim Verschwenken des Reflektors (1) um die vertikale Achse einem Kreisbogen folgt, dessen Mittelpunkt auf der vertikalen Achse liegt. Die Kugelpfanne (27) ist von einem Gelenkteil gebildet, welches in ein in die Rückseite des Reflektors (1) eingebrachtes Sackloch eingreift. Der Verstellbolzen (7) ist mit einem groben Außengewinde (20) versehen und weist auf sich abgewandten Seiten jeweils eine Abflachung (21) auf. Zwischen den Flanken des Außengewindes (20) sind in die Abflachungen (21) Einkerbungen (22) eingebracht, durch welche der Verstellbolzen (7) Sollbiegelinien aufweist, welche parallel zu den Abflachungen (21) und zu der vertikalen Achse verlaufen, um welche der Reflektor (1) schwenkbar ist. Der Verstellbolzen (7) weist zumindest in einem Bereich die Einkerbungen (22) auf. Die Einkerbungen (22) erstrecken sich in ihrer Tiefe annähernd bis zur Längsachse des Verstellbolzens (7) und sind in ihrem Querschnitt V-förmig ausgeführt. Der Verstellbolzen (7) ist mit seinem Außengewinde (20) in einen einzigen Gewindegang (28) eines Gewindes des getriebenen Rades (3) eingedreht. Das von einem Schneckenrad gebildete getriebene Rad (3) ist zylinderförmig ausgeführt und in ein Lager eingesetzt, welches von einer Schale (18) und einer Mulde (19) gebildet ist. Die Mulde (19) ist in die Rückseite des topfförmigen Scheinwerfergehäuse (9) eingebracht und weist eine kreisförmige Grundfläche auf, welche als Anlage für eine Stirnfläche des getriebenen Rades (3) dient und durch dessen Mitte die Radachse (5) des getriebenen Rades (3) verläuft. Die Schale (18) des Lagers ist in eine seitliche Seitenwand des topfförmigen Scheinwerfergehäuses (9) eingebracht und ist dem von einer Schnecke gebildeten treibenden Rad (2) zugewandt. An der Schale (18) des Lagers liegt das getriebene Rad (3) mit seiner Mantelfläche an, in welcher die Verzahnung eingebracht ist. Zwischen dem treibenden Rad (2) und der Mulde (19) des Lagers weist das getriebene Rad (3) eine umlaufende Schulter (10) auf, deren dem treibenden Rad zugewandte Seitenfläche als Hohlkehle ausgeführt ist. Die Hohlkehle ist in ihren Abmessungen dem Kopfkreisdurchmesser des treibenden Rades (2) angepaßt und läuft zwischen den Flanken der Verzahnung des getriebenen Rades (3) aus. Das getriebene Rad (3) ist durch die Anlage des treibenden Rades (4) an der Hohlkehle der Schulter (10) spielfrei in der Mulde (19) und durch die Anlage der Verzahnung des treibenden Rades (2) an der Schulter (19) bzw. an der Verzahnung des getriebenen Rades (3) spielfrei in der Schale (18) gehalten. Dabei kann die Schale (18) einen größeren Durchmesser aufweisen als das getriebene Rad (3). Dadurch muß die Entformungsrichtung der Schale (18) nicht in Richtung der Radachse (5) des getriebenen Rades (3) verlaufen, und die Schale kann von der Werkzeughälfte entformt werden, welche die Innenseite des topfförmigen Scheinwerfergehäuses formt. In einer Endstellung des Reflektors (1) ragt der Verstellbolzen (7) mit dem zur Rückseite des Scheinwerfers weisenden Endabschnitt aus dem getriebenen Rad (3) heraus und ist in einer Vertiefung (30) des Scheinwerfergehäuses (9) angeordnet. Angrenzend an den als Kugelkopf ausgebildeten Endabschnitt (8) des Verstellbolzens ist ein Führungselement (23) an den Verstellbolzen (7) angeformt. Das Führungselement (23) ist eine T-förmige Platte, welche mit dem Querbalken der T-Form und der Stirnfläche des senkrechten Balkens der T-Form an sich zugewandten Gleitflächen (24) des Scheinwerfergehäuses (9) angrenzt. Dadurch ist der Verstellbolzen drehfest gegenüber dem Scheinwerfergehäuse (9) arretiert. Das treibende Rad (2) des Schraubgetriebes ist durch eine Öffnung (11) in einer oberen Seitenwand des Scheinwerfergehäuses (9) hindurchgeführt und durch eine Rastzunge (13) selbstrastend in der Öffnung (11) festgesetzt. Die Rastzunge (13) ist an den inneren Rand der Öffnung (11) des Scheinwerfergehäuses (9) angeformt und greift selbsttätig in eine umlaufende Nut (14) des treibenden Rades (2) ein. Das treibende Rad (2) liegt mit seiner Verzahnung an einer Lagerschale (12) des Scheinwerfergehäuses (9) an. Die Lagerschale (12) ist zum getriebenen Rad (3) hin geöffnet. Der die Verzahnung aufweisende Endabschnitt des treibenden Rades (2) ist hohl ausgeführt und weist einen aus dem Hohlraum herausragenden federnden Lagerzapfen (16) auf, welcher mit seinem freien Endabschnitt in eine Lageröffnung (17) des Scheinwerfergehäuses (9) eingreift. An dem aus der Öffnung (11) des Scheinwerfergehäuses (9) herausragenden Endabschnitt weist das treibende Rad (2) eine Drehvorrichtung (6) und einen umlaufenden Flansch (15) auf. Der Flansch (15) liegt an der Stirnfläche eines die Öffnung (11) des Scheinwerfergehäuses (9) umgebenden Kragens dicht an und weist einen zum Scheinwerfergehäuse hin gerichteten Randabschnitt auf.

### Bezugszeichenliste

### Einstellvorrichtung für einen Reflektor eines Fahrzeugscheinwerfers

- 1: Reflektor
- 2: treibendes Rad
- 3: getriebenes Rad
- 4: Radachse
- 5: Radachse
- 6: Drehvorrichtung
- 7: Verstellbolzen
- 8: Endabschnitt
- 9: Scheinwerfergehäuse
- 10: Schulter
- 11: Öffnung
- 12: Lagerschale
- 13: Rastzunge
- 14: Nut
- 15: Flansch
- 16: Lagerzapfen
- 17: Lageröffnung
- 18: Schale
- 19: Mulde
- 20: Außengewinde
- 21: Abflachung
- 22: Einkerbung
- 23: Führungselement
- 24: Gleitfläche
- 25: Dichtung
- 26: Abschlußscheibe
- 27: Kugelpfanne
- 28: Gewindegang
- 29: Stirnfläche
- 30: Vertiefung

## Patentansprüche

1. Einstellvorrichtung für einen Reflektor (1) eines Fahrzeugscheinwerfers mit einem ein treibendes und getriebenes Rad (2 und 3) aufweisenden Schraubgetriebe, dessen Radachsen (4 und 5) quer und in einem Abstand zueinander verlaufen und dessen treibendes Rad (2) mit einer auf der Außenseite des Scheinwerfers angeordneten Drehvorrichtung (6) versehen ist und dessen getriebenes Rad (3) auf einen Verstellbolzen (7) aufgeschraubt ist, welcher in seiner Längsausdehnung axial verstellbar und drehfest mit dem Scheinwerfer verbunden ist und welcher mit einem Endabschnitt (8) mit dem in ein Scheinwerfergehäuse (9) eingesetzten Reflektor (1) gekoppelt ist, dadurch gekennzeichnet, daß das Schraubgetriebe (Räder 2 und 3) innerhalb des Scheinwerfergehäuses (9) angeordnet ist, wobei das treibende Rad (2) an eine umlaufende Schulter (10) des getriebenen Rades (3) angrenzt und das getriebene Rad (3) an der Innenseite des Scheinwerfergehäuses (9) haltert und das treibende Rad (2) in eine Öffnung (11) einer Seitenwand des Scheinwerfergehäuses (9) eingreift.

2. Einstellvorrichtung nach Anspruch 1, dadurch gekennzeichnet, daß das treibende Rad (2) von der Außenseite des Scheinwerfergehäuses (9) her durch die Öffnung (11) der Seitenwand des Scheinwerfergehäuses (9) hindurchgeführt ist, selbsttätig an dem Scheinwerfergehäuse (9) festgesetzt ist und in eine zum getriebenen Rad (3) hin geöffnete Lagerschale (12) des Scheinwerfergehäuses (9) eingreift.

3. Einstellvorrichtung nach Anspruch 1 oder 2, dadurch gekennzeichnet, daß das treibende Rad (2) durch mindestens eine an den Rand der Öffnung (11) des Scheinwerfergehäuses (9) angeformte und in das Innere des Scheinwerfergehäuses (9) weisende Rastzunge (13), welche in eine umlaufende Nut (14) des treibenden Rades (2) eingreift, selbsttätig an dem Scheinwerfergehäuse (9) festgesetzt ist.

4. Einstellvorrichtung nach einem der Ansprüche 1 bis 3, dadurch gekennzeichnet, daß das treibende Rad (2) mit dem die Drehvorrichtung (6) aufweisenden und aus der Öffnung (11) des Scheinwerfergehäuses (9) herausragenden Endabschnitt einen umlaufenden Flansch (15) aufweist, welcher an der Außenseite des Scheinwerfergehäuses (9) dicht anliegt.

5. Einstellvorrichtung nach einem der Ansprüche 1 bis 4, dadurch gekennzeichnet, daß das treibende Rad (2) mit dem die Verzahnung aufweisenden Endabschnitt hohl ausgeführt ist und einen aus dem Hohlraum herausragenden Lagerzapfen (16) aufweist, welcher in eine Lageröffnung (17) des Scheinwerfergehäuses (9) eingreift.

6. Einstellvorrichtung nach einem der Ansprüche 1 bis 5, dadurch gekennzeichnet, daß das getriebene Rad (3) in einer zum treibenden Rad (2) hin geöffneten Schale (18) und mit dem vom Reflektor (1) abgewandten Endabschnitt in eine Mulde (19) eines Lagers des Scheinwerfergehäuses (9) eingreift.

7. Einstellvorrichtung nach einem der Ansprüche 1 bis 6, dadurch gekennzeichnet, daß die an das treibende Rad (2) angrenzende Seitenfläche der Schulter (10) des getriebenen Rades (3) als Hohlkehle ausgeführt ist, welche dem Kopfkreisdurchmesser des treibenden Rades angepaßt ist.

8. Einstellvorrichtung nach einem der Ansprüche 1 bis 7, dadurch gekennzeichnet, daß der Verstellbolzen (7) aus einem elastisch nachgiebigen Kunststoff hergestellt ist, ein grobes Außengewinde (20) aufweist und auf sich abgewandten Seiten mit einer Abflachung (21) versehen ist, wobei Abschnitte des Verstellbolzens (7), welche zwischen den Flanken des groben Außengewindes (20) verlaufen, als Sollbiegestellen für den Verstellbolzen (7) dienen.

9. Einstellvorrichtung nach Anspruch 8, dadurch gekennzeichnet, daß Einkerbungen (22), welche mindestens in eine der Abflachungen (21) des Verstellbolzens (7) eingebracht sind, die Sollbiegestellen bilden.

10. Einstellvorrichtung nach einem der Ansprüche 1 bis 9, dadurch gekennzeichnet, daß der Verstellbolzen (7) ein angeformtes Führungselement (23) aufweist, welches zwischen dem getriebenen Rad (3) und dem freien Endabschnitt (8) des Verstellbolzens (7) angeordnet ist und durch die Anlage an mindestens einer Gleitfläche (24) des Scheinwerfergehäuses (9) gegenüber dem Scheinwerfergehäuse (9) drehfest fixiert ist.

11. Einstellvorrichtung nach Anspruch 10, dadurch gekennzeichnet, daß das Führungselement (23) zwischen zwei sich zugewandten Gleitflächen (24) angeordnet ist.

## Claims

1. Adjustment mechanism for a reflector (1) on a vehicle headlamp, having a screw gear which incorporates a driving and driven wheel (2 and 3), the wheel axes (4 and 5) of which gear extend at right angles to and spaced apart from one another, and the driving wheel (2) of which gear is provided with a rotating mechanism (6) disposed on the outside of the headlamp, and the driven wheel (3) of which gear is screwed onto an adjusting pin (7) which is axially adjustable in its longitudinal extension and is joined to the headlamp in a manner locked against rotation and which is coupled by one end section (8) to the reflector (1) inserted into a headlamp housing (9), characterised in that the screw gear (wheels 2 and 3) is disposed inside the headlamp housing (9), the driving wheel (2) being contiguous with an all-round shoulder (10) of the driven wheel (3) and the driven wheel (3) being retained on the inside of the headlamp housing (9) and the driving wheel (2) engaging in an opening (11) in a side wall of the headlamp housing (9).

2. Adjustment mechanism according to claim 1, characterised in that the driving wheel (2) is guided through the opening (11) in the side wall of the headlamp housing (9) from the outside of the headlamp housing (9), is automatically located against the headlamp housing (9) and engages in a bearing shell (12), which is open towards the driven wheel (3), on the headlamp housing (9).

3. Adjustment mechanism according to claim 1 or 2, characterised in that the driving wheel (2) is automatically located against the headlamp housing (9) by at least one locking tab (13) formed onto the rim of the opening (11) in the headlamp housing (9) and pointing into the interior of the headlamp housing (9), which tab (13) engages in an all-round groove (14) on the driving wheel (2).

4. Adjustment mechanism according to any of claims 1 to 3, characterised in that the driving wheel (2) with the end section incorporating the rotating mechanism (6) and projecting from the opening (11) in the headlamp housing (9) features an all-round flange (15) which bears tightly against the outside of the headlamp housing (9).

5. Adjustment mechanism according to any of claims 1 to 4, characterised in that the driving wheel (2) with the end section featuring the gear teeth is a hollow construction and has a journal (16) which projects from the cavity and engages in a bearing opening (17) of the headlamp housing (9).

6. Adjustment mechanism according to any of claims 1 to 5, characterised in that the driven wheel (3) in a shell (18) open towards the driving wheel (2) and by the end section remote from the reflector (1) engages in a trough (19) of a bearing of the headlamp housing (9).

7. Adjustment mechanism according to any of claims 1 to 6, characterised in that the lateral face, contiguous with the driving wheel (2), of the shoulder (10) of the driven wheel (3) is constructed as a hollow throat which is matched to the outside diameter of the driving wheel.

8. Adjustment mechanism according to any of claims 1 to 7, characterised in that the adjusting pin (7) is made from an elastically pliant plastic, has a coarse external thread (20) and on faces directed away from one another is provided with a flattened area (21), with sections of the adjusting pin (7) which extend between the flanks of the coarse external thread (20) acting as predetermined bending locations for the adjusting pin (7).

9. Adjustment mechanism according to claim 8, characterised in that indentations (22) which are incorporated at least in one of the flattened areas (21) of the adjusting pin (7) constitute the predetermined bending locations.

10. Adjustment mechanism according to any of claims 1 to 9, characterised in that the adjusting pin (7) has a moulded-on guide element (23) which is disposed between the driven wheel (3) and the free end section (8) of the adjusting pin (7) and is fixed, in a manner locked against rotation relative to the headlamp housing (9), by bearing against at least one sliding surface (24) of the headlamp housing (9).

11. Adjustment mechanism according to claim 10, characterised in that the guide element (23) is disposed between two mutually facing sliding surfaces (24).

## Revendications

1. Dispositif de réglage pour un réflecteur (1) d'un phare de véhicule, comportant un engrenage hélicoïdal présentant une roue menante et une roue menée (2 et 3), dont les axes (4 et 5) s'étendent transversalement et à distance l'un de l'autre, la roue menante (2) étant pourvue d'un dispositif rotatif (6) agencé sur la face extérieure du phare, et la roue menée (3) étant vissée sur un boulon de réglage (7) susceptible d'être déplacé axialement dans son extension longitudinale et relié solidaire en rotation avec le phare et lequel est accouplé par un tronçon d'extrémité (8) avec le réflecteur (1) mis en place dans un boîtier (9) de phare, caractérisé en ce que l'engrenage hélicoïdal (roues 2 et 3) est agencé à l'intérieur du boîtier (9) de phare, la roue menante (2) étant adjacente à un épaulement (10) périphérique de la roue menée (3), et la roue menée (3) étant maintenue sur la face intérieure du boîtier (9) de phare, et la roue menante (2) s'engageant dans une ouverture (11) d'une paroi latérale du boîtier (9) du phare.

2. Dispositif de réglage selon la revendication 1, caractérisé en ce que la roue menante (2) est passée depuis la face extérieure du boîtier (9) de phare à travers l'ouverture (11) de la paroi latérale du boîtier (9) de phare, est fixée automatiquement sur le boîtier (9) de phare et s'engage dans une coque de montage (12) du boîtier (9) de phare, ouverte vers la roue menée (3).

3. Dispositif de réglage selon l'une ou l'autre des revendications 1 et 2, caractérisé en ce que la roue menante (2) est fixée automatiquement sur le boîtier (9) de phare par au moins une languette d'enclenchement (13) formée sur le bord de l'ouverture (11) du boîtier (9) de phare et orientée vers l'intérieur du boîtier (9) de phare, laquelle s'engage dans une rainure (14) périphérique de la roue menante (2).

4. Dispositif de réglage selon l'une quelconque des revendications 1 à 3, caractérisé en ce que la roue menante (2) présente avec le tronçon d'extrémité contenant le dispositif rotatif (6) et faisant saillie hors de l'ouverture (11) du boîtier (9) de phare une bride (15) périphérique qui repose de manière étanche sur la face extérieure du boîtier (9) de phare.

5. Dispositif de réglage selon l'une quelconque des revendications 1 à 4, caractérisé en ce que la roue menante (2) comportant le tronçon d'extrémité présentant la denture est réalisée creuse et présente un tourillon (16) faisant saillie hors de la cavité, lequel s'engage dans une ouverture de montage (17) du boîtier (9) de phare.

6. Dispositif de réglage selon l'une quelconque des revendications 1 à 5, caractérisé en ce que la roue menée (3) s'engage dans une coque (18) ouverte vers la roue menante (2) et, avec le tronçon d'extrémité détourné du réflecteur (1), elle s'engage dans un enfoncement (19) d'un palier du boîtier (9) de phare.

7. Dispositif de réglage selon l'une quelconque des revendications 1 à 6, caractérisé en ce que la face latérale, adjacente à la roue menante (2), de l'épaulement (10) de la roue menée (3), est réalisée sous forme de gorge qui épouse le diamètre du cercle de tête de la roue menante.

8. Dispositif de réglage selon l'une quelconque des revendications 1 à 7, caractérisé en ce que le boulon de réglage (7) est réalisé en une matière plastique élastique souple, en ce qu'il présente un filetage extérieur (20) grossier et en ce qu'il est pourvu sur son côté détourné d'un aplatissement (21), des tronçons du boulon de réglage (7) qui s'étendent entre les flancs du filetage extérieur (20) grossier servant de points de flexion de consigne pour le boulon de réglage (7).

9. Dispositif de réglage selon revendication 8, caractérisé en ce que les points de flexion de consigne sont formés par des encoches (22) qui sont ménagées dans au moins un des aplatissements (21) du boulon de réglage (7).

10. Dispositif de réglage selon l'une quelconque des revendications 1 à 9, caractérisé en ce que le boulon de réglage (7) présente un élément de guidage (23) formé sur lui-même, qui est agencé entre la roue menée (3) et le tronçon d'extrémité (8) libre du boulon de réglage (7) et qui est fixé solidaire en rotation par rapport au boîtier (9) de phare, par appui sur au moins une surface de glissement (24) du boîtier (9) de phare.

11. Dispositif de réglage selon la revendication 10, caractérisé en ce que l'élément de guidage (23) est agencé entre deux surfaces de glissement (24) qui se font face.
